# EUROPEAN PATENT SPECIFICATION

(11) **EP 0 885 080 B1**
(45) Date of publication and mention of the grant of the patent: **04.10.2001**
(21) Application number: 97900363.9
(22) Date of filing: 17.01.1997
(51) Int. Cl.: B23B 41/12, B23Q 3/00

(54) **CYLINDER BLOCK MOUNTING FIXTURE**
SPANNVORRICHTUNG FÜR ZYLINDERBLOCK
DISPOSITIF DE MONTAGE POUR BLOC-CYLINDRES

(30) Priority: 23.02.1996 GB 9603854
(43) Date of publication of application: 23.12.1998
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S.A., 92506 Rueil-Malmaison Cédex (FR)
(72) Inventor: PETERS, Mark, London SE10 8RT (GB)
(74) Representative: Messulam, Alec Moses
(86) International application number: GB9700116
(87) International publication number: WO9730814

(56) References cited:
- DE-A- 2 627 886
- US-A- 4 168 826

## Description

The present invention relates to a mounting fixture for machining a cylinder block and to a method for machining a cylinder block, in particular for both deep-skirted and shallow-skirted cylinder blocks for a motor vehicle.

Cylinder blocks are cast in metal, generally in iron or an aluminium alloy and then precisely machined. Some of the machining is relatively light, for example the provision of tapped mounting holes for components to be bolted to the exterior of the cylinder block. However, much of the machining is heavy, for example the boring out of the cylinders, and deep tapped bolt holes for holding down the cylinder head.

The cylinder block has to be very securely mounted during the heavy machining owing to the forces imparted by, for example, a drill. The cylinder block may also have be taken out of a mount and rotated and moved into a new orientation for further machining steps, which may have to be performed on all sides of the block.

Each time the cylinder block is demounted, it must be precisely re-aligned to maintain close tolerances in the relative separation between machined surfaces. The alignment of the block is usually measured by a set of datum surfaces on different sides of the block which are machined at the outset of the machining process.

Various devices and methods relating to machining of a cylinder block have been proposed. Patent document DE-A-2 627 886 describes a method of mounting a pair of cylinder blocks with cylinder heads in contact, and then machining coaxial cylinder bores in both blocks in a single operation. Although this reduces the number of machining operations, the heavy forces imparted in the operation must be borne by another part of a mounting fixture. Furthermore, because the cylinder heads are clamped together it is not possible to machine other features in the cylinder head such as deep tapped bolt holes.

Patent documents US 4 168 826 and US 4 358 229 both disclose mounting fixtures for a single V-type cylinder block, which support the block on a cylindrical rod in contact with the crank bearing, the block being held down with a clamp encircling a flat top surface of the block. The support rods have a diameter such that the rods engage with an upper surface of the crank bore thereby providing support, but not alignment, from the crank bore.
Alignment with the machine tool is then provided by the flat top surface of the block. Although such mounting fixtures provide support and alignment, these fixtures are limited to the boring or honing of cylinder bores and require a pre-machined surface on the top of the cylinder block for alignment. In addition, the heavy forces imparted in the machining operation must be borne by another part of a mounting fixture.

It is an object of the present invention to provide a mounting fixture that overcomes some of these limitations.

According to the invention there is provided a mounting fixture for mounting a pair of cylinder blocks having skirts which extend either side of a crank bearing, comprising a retention means for retaining cylinder blocks on the fixture, characterised in that the fixture comprises a double-sided mounting plate on which the cylinder blocks may be mounted, the mounting plate having on each side a set of mounting surfaces adapted to locate with alignment surfaces machined on the block within the skirt and the retention means being arranged on either side of the mounting plate to retain the cylinder block on the fixture after location of the mounting surfaces with the alignment surfaces.

The cylinder block may be for a motor vehicle and have four or more in-line cylinders. The skirt may be a deep skirt which in use encloses an oil pan. However, the skirt may be shallow and not extend as far down as the crank bearing.

Crank bearings are conventionally formed with a removable half so that the crank shaft can be assembled with the cylinder block. These removable parts of the crank bearing can be either individual semi-circular sections or may be joined together in a single assembly called a ladder. The removable half needs to be precisely alignable with the fixed half of the crank bearings integral with the cylinder block.

The mounting surfaces may therefore advantageously locate with alignment surfaces about the crank bearing, the alignment surfaces being arranged to locate a removable half of the crank bearing with a fixed half of the crank bearing.

Preferably, the mounting surfaces locate with all of the alignment surfaces which are adapted to locate the removable half of the crank bearing with the fixed half of the crank bearing.

In order to define the location of the cylinder block on the mounting plate precisely in two or three dimensions, three or more mounting surfaces may locate with a corresponding number of alignment surfaces.

It is generally preferred if the pair of cylinder blocks is mounted so that the same machining operations may be performed on both cylinder blocks simultaneously in a manner in which the force applied during machining of one cylinder block provides a restoring force to the force applied during machining of the other cylinder block. This is particularly the case for the heaviest machining, which will be the boring out of the cylinders and the drilling of deep bolt holes for attaching a cylinder head to the block.

Therefore it is advantageous if the fixture has mounting surfaces on either side of the fixture which are symmetrically opposite. The cylinder blocks may then be mounted so that one of the cylinder blocks is machined with cylinder bores having axes which are during machining collinear with axes of cylinder bores in the other cylinder block.

The retention means may conveniently be provided on the double-sided mounting plate.

The retention means may act at points on the skirts about the external periphery of the skirts, or alternatively or additionally the retention means may act at points on the skirts inside the skirts.

The retention means may be in the form of one or more clamps which move or rotate to engage with a lip or flange on the cylinder block. The lip may be on the lower-most edge of the skirts. Each clamp may be activated individually and manually. Alternatively, the mounting plate may have a mechanism therein, for example a rack, which when activated operates a number of the clamps simultaneously.

In a preferred embodiment, the mounting plate comprises planar side sections which extend either side of a raised central portion on which the mounting surfaces are provided. The mounting surface may be on a shoe which is removably fixed to the mounting plate, for example in order to allow a shoe to be changed if the mounting surface is damaged or becomes worn. Such an arrangement also permits the shoe to be made from a durable material such as a hardened steel, while the rest of the mounting plate may be formed substantially from a much lighter material such as an aluminium alloy.

The mounting fixture may have mounting points on opposite sides adapted to be held in machine chucks during machining of the cylinder blocks. The mounting points preferably have reference surfaces arranged in a defined relationship with the mounting surfaces so that machining can be done with reference to the location of the mounting points. The defined relationship may be fixed, or may vary in a predicable way, for example if the cylinder blocks may rotate about the mounting points. Therefore once the cylinder blocks are mounted on the fixture, machining operations can be performed without the need to refer to any datum points on the cylinder block. In this case, the alignment surfaces serve as both mounting points and datum points for machining of the cylinder block.

In general, it is preferred if axes of the crank bearings are arranged to be parallel when the cylinder blocks are mounted on the fixture in order to make the fixture substantially balanced about an axis mid-way between and parallel with the axes of the crank bearings. Such an arrangement may also be necessary in order to align the axes of cylinder bores on opposite sides of the mounting plate.

In this case, the mounting points may also be aligned symmetrically about the axis mid-way between and parallel with the axes of the crank bearings.

Also according to the invention there is provided a method for machining a pair of cylinder blocks having skirts which extend either side of a crank bearing, using a mounting fixture comprising a double-sided mounting plate having on each side a set of mounting surfaces adapted to locate with alignment surfaces machined within the skirt about the crank bearing and a retention means for retaining the cylinder block on the fixture after location of the mounting surfaces with the alignment surfaces, comprising the steps of:
i) offering up the cylinder blocks to opposite sides of the mounting plate to locate the mounting surfaces with the alignment surfaces;
ii) activating the retention means to hold the cylinder blocks in place with respect to the mounting surfaces;
iii) carrying out a machining operation on the blocks.

The machining operation preferably involves machining both the cylinder blocks at the same time so that the force applied during machining of one cylinder block provides a restoring force for the machining of the other cylinder block.

When the mounting fixture has mounting points on opposite sides adapted to be held in machine chucks during machining of the cylinder blocks, the method may further comprise between step ii) and step iii) the step of:
iv) mounting the fixture in the machine chucks.

The mounting point preferably has reference surfaces arranged in a defined relationship with the mounting surfaces so that machining can be done with reference to the location of the mounting points, in which case the method further comprises immediately before or after step iii) the step of:
v) rotating and/or translating the mounting fixture to machine different sides of the cylinder blocks.

The method may further comprise after step iii) or after step v) the steps of:
vi) demounting the fixture from the machine chucks;
vii) mounting the fixture in different machine chucks prior to further machining.

The invention will now be described further by way of example and with reference to the accompanying drawings in which:
Figure 1 is a perspective view of a pair of cylinder blocks mounted on a mounting fixture according to the invention;
Figure 2 is a top view of a crank bearing ladder;
Figure 3 is an end view of a cylinder block showing the connection of the crank bearing ladder and the other half of the crank bearing integral with the cylinder block;
Figure 4 is an enlarged cross section through the crank ladder taken along line IV-IV of Figure 2, showing in the detail the locating of the crank ladder with alignment surfaces about the cylinder block half of the crank bearing;
Figure 5 is an end view of the mounting fixture and cylinder blocks of Figure 1;
Figure 6 is a top view of the mounting fixture showing in outline the position of a cylinder block skirt and peripheral retention clamps;
Figure 7 is a cross-section of the mounting fixture of Figure 6 taken along lines VII-VII (upper part) and vii-vii (lower part); and
Figure 8 is an end view of the mounting fixture and cylinder blocks of Figure 5 showing one of a pair of mounting points held in a chuck on a fixture location nest.

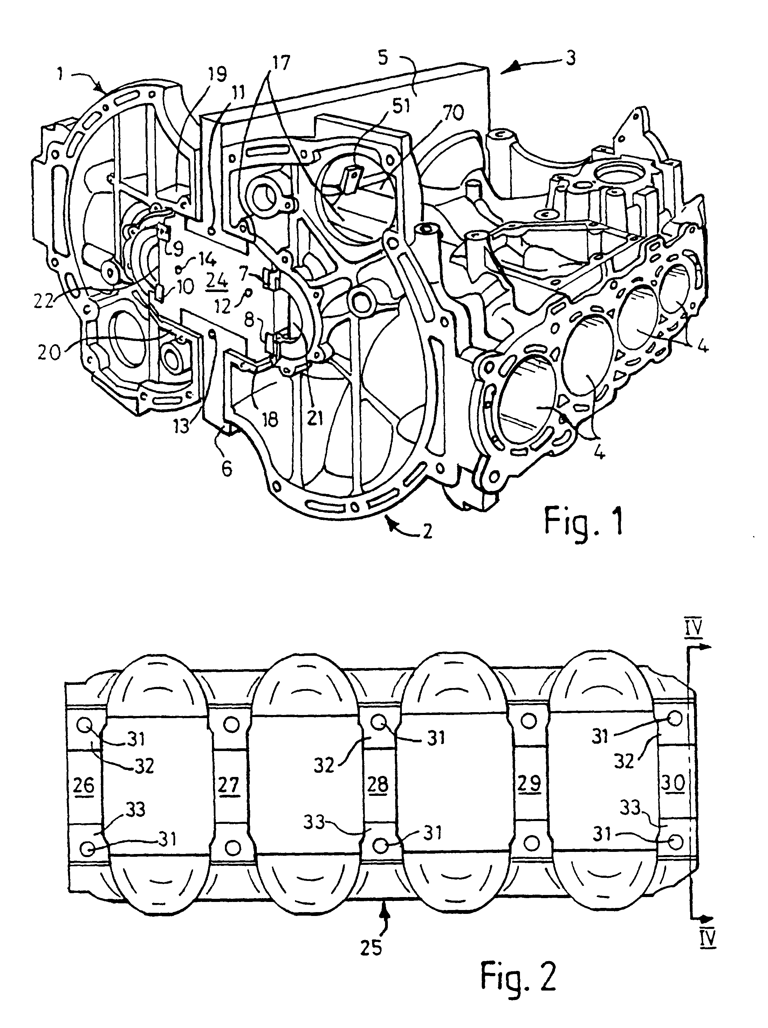

Figure 1 shows a pair of similar cylinder blocks 1,2 mounted on opposite sides of a mounting fixture 3. The cylinder blocks are drawn as they would look after machining of all flat surfaces and holes. The blocks each have four in-line cylinders 4. The cylinder blocks are mounted so that the axes of each set of cylinders are collinear with the other set of cylinders.

The cylinder blocks 1,2 illustrated are the deep-skirted type each with a pair of skirts 17,18 and 19,20 either side of a crank bore or bearing 21,22. In use, the skirts partially enclose an oil pan below the cylinder block.

The fixture 3 has a mounting plate in the form of two planar side sections 5,6 which are divided by and attached to a central mounting portion 24. The side plates and mounting portion are made from an aluminium alloy which is strong enough to support the weight of both cylinder blocks when these are cast from a light weight material such as an aluminium alloy or a composite material. If the engine blocks are cast from iron, then the dimensions of the fixture may be increased, or the fixture may be made substantially from steel, in order to support the extra weight.

The cylinder blocks are mounted on a number of mounting shoes with mounting surfaces which extend from the central mounting portion 24. Four of the shoes 7,8,9,10 are visible in Figure 1. As will be described in more detail below, these shoes engage with alignment surfaces either side of and along the length of the crank bores 21,22. The crank bores and alignment surfaces will have been machined before mounting of the cylinder block to the mounting fixture.

As will be explained in more detail below, each end of the mounting fixture 3 has four tapped holes 11,12,13,14 for fitting a mounting point for a machine chuck.

The cylinder blocks are retained on the fixture by a number of similar clamps, one of which 51 may be seen in the figure. This clamp 51 is engaged on a lip 70 on the outer periphery of one of the skirts 17.

Figure 2 shows a conventional crank bore ladder 25 which forms a removable half of the crank bearing 21,22 and which attaches to the other half of the crank bearing machined into the cylinder block 1,2.

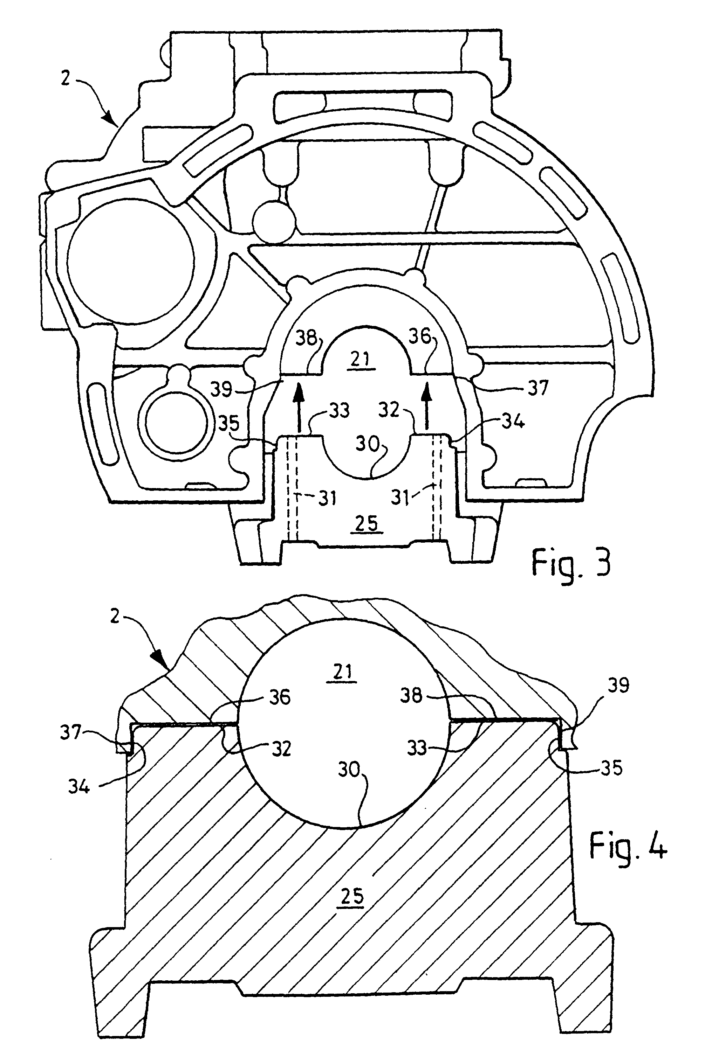

The ladder 25 has five bearing half-rings 26-30 with spaces therebetween for the connection of four con rods to a crank shaft. On either side of the bearing half-rings the ladder has a total of ten through holes 31 for bolting the ladder to the cylinder block. As illustrated by Figures 3 and 4, these holes 31 pass through precisely machined reference surfaces 32,33 for locating the removable half of the crank bearing with the other half fixed to the cylinder block.

The reference surfaces 32,33 each extend from the bearing half-rings 26-30 of the crank bore 21 to end in outwardly facing right angle steps 34,35. The reference surfaces 32,33 and steps 34,35 seat in matching pairs of alignment surfaces 36,38 and 37,39 machined into the cylinder block 2 about either side of the crank bore 21 to align the ladder with the cylinder block in two dimensions. The third dimension, along the length of the crank bore 21, may be aligned with matching flat surfaces (not shown), either opposing or coplanar, machined into the ladder and cylinder block.

The fit between the two halves of the crank bearing is so close that once the ladder is inserted into place, it will easily retain its own weight. Bolts (not shown) then secure the ladder to the cylinder block through the ten bolt holes 31.

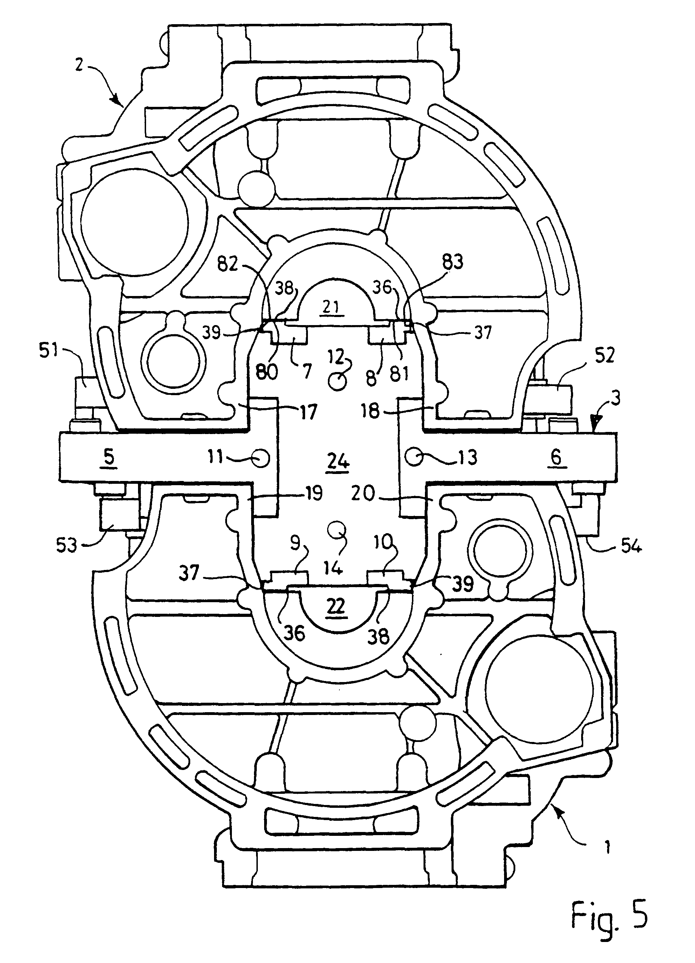

Figure 5 shows how the alignment surfaces 36-39 are used in the present invention in order to mount and align a pair of cylinder blocks 1,2 with the mounting fixture 3.
Each cylinder block is offered up in turn to opposite sides of the fixture. The alignment surfaces of the cylinder blocks locate and engage with the shoes, the end four of which 7-10 are visible in Figure 5. The shoes are positioned so that there remains a small clearance between the skirts 17-20 and the planar side sections 5,6. The cylinder blocks are then retained on the mounting fixture by means of clamps, four of which 51-54 are visible in Figure 5. The machining operations may then take place on the blocks.

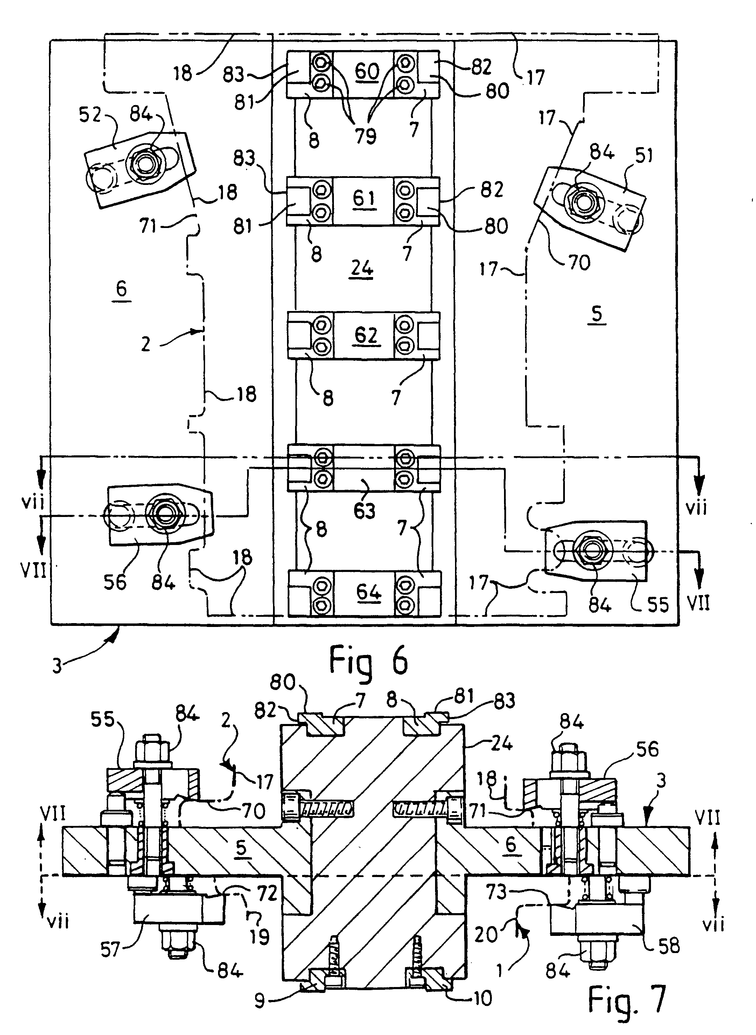

Figures 6 and 7 show the mounting and clamping arrangement in more detail. The external periphery of the pairs of skirts 17,18 and 19,20 are shown in dashed outline. Pairs of clamps 51,55, 52,56, 53,57 and 54,58 extend from the planar side sections 5,6 to hold down the four skirts 17-20 along lipped or flanged edges 70-73.

The central mounting portion 24 has on each side ten mounting shoes 7,8, and 9,10. These each are bolted down with a pair of bolts 79 on five raised sections 60-64 of the mounting portion, the positions of which correspond with the five bearing half-rings 26-30 of the ladder 25.

The mounting shoes 7-10 have mounting surfaces 80,81 and 82,83 which correspond with the machined reference surfaces 32,33 and outwardly facing right angle steps 34,35 of the ladder 25. The cylinder blocks 1,2 therefore each fit on the mounting shoes 7-10 in the same way that the cylinder block fits with the ladder 25.

Once the cylinder blocks are in place, the clamps 51-58 are operated by extending the clamps forward over the flanges edges 70-73 of the skirts and tightening down clamp nuts 84.

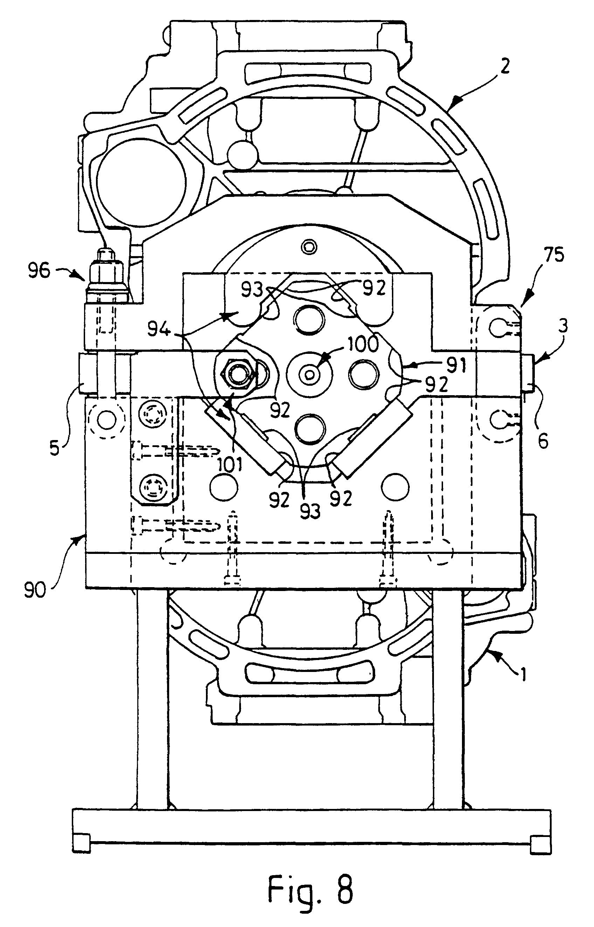

The fixture has been described so far for the sake of clarity without any'mention of means to mount the fixture in a boring or milling machine. Figure 8 shows the fixture 3 held within a fixture location nest 90 for this purpose. The fixture has in use a pair of generally square mounting points, one of which 91 may be seen in Figure 8, with the other mounting point hidden from view on the opposite side of the fixture.

Each square mounting point 91 is attached to the fixture via a pivot 100 to a plate (not shown) bolted with four bolts to the four tapped holes 11-14, as mentioned above. The pivots are centered on an axis which is equidistant and coplanar with axes defining the centres of the crank bores.

The mounting points each have a square profile with sets of exposed 92 and recessed 93 reference surfaces. The fixture location nest has clamping jaws 94 which pivot open or closed from one end 95 and can be bolted shut at the other end 96. One side of the jaws contacts two of the recessed reference surfaces and the other side contacts the exposed reference surfaces.

The pivots 100 allow the mounting fixture to be rotated to rotate the cylinder blocks 1,2 to the desired orientation whereupon the pivot can be locked by a bolt-operated locking mechanism 101.

The fixture location nest 90 can be used not just to hold the cylinder blocks in position, and to rotate the cylinder blocks to a different orientation, but also to transport the cylinder blocks to a different boring or milling machine.

Although the invention has been described with reference to a deep-skirted cylinder block with in-line cylinders, the invention applies equally to a cylinder block with a shallow skirt which does not extend as far down from the block as the crank bore and/or an engine with V-cylinders.

For a shallow skirt block, the retention means would need to be elevated with respect to the mounting surfaces so as to retain the cylinder block at a higher point. Such elevated retention points may, of course also be employed with a mounting fixture for a deep-skirted block, although it is envisaged that retention points closer to the lower edge of the skirt would generally be more convenient.

For V-cylinder engines, it may not be possible to have cylinders on opposite sides of the mounting fixture with cylinder axes in exact alignment. However, it would be possible to position the blocks so that all cylinders were substantially aligned. The forces imparted during machining on one side of the mounting fixture would then provide most of the restoring force required by machining on the other side of the fixture. The fixture itself could then be held more securely in a fixture location nest or be more robust in order to provide the remaining necessary restoring force.

A mounting fixture and method of machining a cylinder block as described above simplifies many of the machining operations that must be carried out on a cast cylinder block. In particular, many of the important dimensions and tolerances in the block, for example, the location and dimensions of the cylinder bore, must be precisely referenced, ultimately, to the machined surface of the crank bearings. The invention avoids the need to use widely separated datum points on the block, and uses instead alignment surfaces to mount the block, the alignment surfaces being machined in precise tolerance with the crank bearings.

The mounting of a pair of cylinder blocks also permits the heavier machining operations to be performed in a manner which allows the machining of one side to provide a restoring force to the machining of the other side. This permits a considerable savings in the size and robustness required of a mounting fixture.

The features of improved alignment and compact mounting fixture allow the implementation of a more efficient and speedy manufacturing process for cylinder blocks.

## Claims

1. A mounting fixture (3) for mounting a pair of cylinder blocks (1, 2) having skirts (17, 18, 19, 20) which extend either side of a crank bearing (21, 22), comprising a retention means for retaining cylinder blocks (1, 2) on the fixture, **characterised in that** the fixture (3) comprises a double-sided mounting plate (5, 6) on which the cylinder blocks may be mounted, the mounting plate having on each side a set of mounting surfaces (36-39) adapted to locate with alignment surfaces (32-35) machined on the block within the skirt and the retention means (51-54) being arranged on either side of the mounting plate to retain the cylinder block (1, 2) on the fixture (3) after location of the mounting surfaces (36-39) with the alignment surfaces (32-35).

2. A mounting fixture as claimed in Claim 1, in which the mounting surfaces (36-39) locate with alignment surfaces (32-35) about the crank bearing (21, 22), the alignment surfaces being arranged to locate a removable half of the crank bearing with a fixed half of the crank bearing.

3. A mounting fixture as claimed in Claim 2, in which the mounting surfaces (36-39) locate with all of the alignment surfaces adapted to locate the removable half of the crank bearing with the fixed half of the crank bearing.

4. A mounting fixture as claimed in any preceding claim, in which three or more mounting surfaces (36-39) locate with a corresponding number of alignment surfaces (32-35).

5. A mounting fixture as claimed in any preceding claim, in which the pair of cylinder blocks (1, 2) may be mounted so that the same machining operations may be performed on both cylinder blocks (1, 2) simultaneously in a manner in which the force applied during machining of one cylinder block provides a restoring force to the force applied during machining of the other cylinder block.

6. A mounting fixture as claimed in any preceding claim, in which the retention means (51-54) is arranged to act at points on the skirts about the external periphery of the skirts.

7. A mounting fixture as claimed in any preceding claim, in which the retention means (51-54) has at least one clamp which moves to engage with a lip on the cylinder block.

8. A mounting fixture as claimed in Claim 7, in which a number of clamps (51-54) may be operated simultaneously by a mechanism within the mounting plate.

9. A mounting fixture as claimed in any preceding claim, in which the mounting plate comprises planar side sections (5, 6) which extend either side of a raised central portion (24) on which the mounting surfaces are provided.

10. A mounting fixture as claimed in any preceding claim, in which a mounting surface (36-39) is provided on a shoe removably fixed to the mounting plate.

11. A mounting fixture as claimed in any preceding claim, in which the mounting fixture (3) has mounting points (91) on opposite sides adapted to be held in machine chucks during machining of the cylinder blocks.

12. A mounting fixture as claimed in Claim 11, in which the mounting points (91) have reference surfaces (92, 93) arranged in a defined relationship with the mounting surfaces so that machining can be done with reference to the location of the mounting points (91).

13. A method for machining a pair of cylinder blocks having skirts which extend either side of a crank bearing, using a mounting fixture (3) as claimed in any one of Claims 1 to 17, comprising the steps of:
i) offering up the cylinder blocks (1, 2) to opposite sides of the mounting plate to locate the mounting surfaces with the alignment surfaces;
ii) activating the retention means (51-54) to hold the cylinder blocks in place with respect to the mounting surfaces;
iii) carrying out a machining operation on the blocks.

14. A method as claimed in Claim 13, in which the machining operation involves machining both the cylinder blocks at the same time so that the force applied during machining of one cylinder block provides a restoring force for the machining of the other cylinder block.

15. A method as claimed in Claim 13 or Claim 14, in which the mounting fixture has mounting points on opposite sides adapted to be held in machine chucks during machining of the cylinder blocks, further comprising between step ii) and step iii) the step of:
iv) mounting the fixture in the machine chucks.

16. A method as claimed in Claim 15, in which the mounting point has reference surfaces arranged in a defined relationship with the mounting surfaces so that machining can be done with reference to the location of the mounting points, further comprising immediately before or after step iii) the step of:
v) rotating and/or translating the mounting fixture to machine different sides of the cylinder blocks.

## Patentansprüche

1. Eine Aufspannbefestigung (3) zur Montage eines Paars von Zylinderblöcken (1, 2), die sich zu beiden Seiten eines Kurbellagers (21, 22) erstreckende Ränder (17, 18, 19, 20) besitzen; welche eine Rückhaltevorrichtung zum Zurückhalten der Zylinderblöcke (1, 2) auf der Befestigung umfaßt; **dadurch gekennzeichnet daß** die Befestigung (3) eine doppelseitige Aufspannplatte (5, 6) umfaßt, auf welcher die Zylinderblöcke aufgespannt werden können; wobei die Aufspannplatte auf jeder Seite einen Satz Spannoberflächen (36-39) besitzt, die angepasst sind um an Ausrichteoberflächen (32-35) anzusetzen, die innerhalb des Randes am Block angearbeitet sind; und wobei die Rückhaltevorrichtungen (51-54) auf beiden Seiten der Aufspannplatte angeordnet sind, um den Zylinderblock (1, 2) - nach Ansetzen oder Positionierung der Spannoberflächen (36-39) an bzw. gegenüber den Ausrichteoberflächen (32-35) - auf der Befestigung (3) zurückzuhalten.

2. Eine Aufspannbefestigung nach Anspruch 1, in welcher die Spannoberflächen (36-39) sich an Ausrichteoberflächen (32-35) um das Kurbellager (21, 22) setzen; wobei die Ausrichteoberflächen angeordnet sind um eine entfernbare Hälfte des Kurbellagers gegen eine ortsfeste Hälffe des Kurbellagers zu setzen.

3. Eine Aufspannbefestigung nach Anspruch 1, in welcher die Spannoberflächen (36-39) an all jenen Ausrichteoberflächen angreift, die angepaßt sind um die entfernbare Hälfte des Kurbellagers gegen die ortsfeste Hälfte des Kurbellagers zu setzen.

4. Eine Aufspannbefestigung nach einem der vorstehenden Ansprüche, in welcher drei oder mehr Spannoberflächen (36-39) sich gegen eine entsprechende Zahl von Ausrichteoberflächen (32-35) setzen.

5. Eine Aufspannbefestigung nach einem der vorstehenden Ansprüche, in welcher das Paar von Zylinderblöcken (1, 2) so montiert sein kann, daß an beiden Zylinderblöcken (1, 2) gleichzeitig die gleichen maschinellen Bearbeitungsvorgänge in einer solchen Art und Weise ausgeführt werden können, daß die während der maschinellen Bearbeitung eines Zylinderblocks angewandte Kraft eine Rückstellkraft für die während der maschinellen Bearbeitung des anderen Zylinderblocks angewandte Kraft bereitstellt.

6. Eine Aufspannbefestigung nach einem der vorstehenden Ansprüche, in welcher die Rückhaltevorrichtungen (51, 54) angeordnet sind, um auf Punkte an den Rändern um den äußeren Umfang der Ränder herum zu wirken.

7. Eine Aufspannbefestigung nach einem der vorstehenden Ansprüche, in welcher die Rückhaltevorrichtungen (51-54) mindestens eine Klammer aufweist, die sich bewegt um an einer Lippe am Zylinderblock anzugreifen.

8. Eine Aufspannbefestigung nach Anspruch 7, in welcher eine Anzahl von Klammern (51-54) durch einen Mechanismus innerhalb der Aufspannplatte gleichzeitig betätigt werden kann.

9. Eine Aufspannbefestigung nach einem der vorstehenden Ansprüche, in welcher die Aufspannplatte planare Seitenabschnitte (5, 6) umfaßt, weiche sich auf beiden Seiten eines erhöhten Zentralabschnitts (24) erstrecken, auf welchem die Aufspannflächen bereitgestellt sind.

10. Eine Aufspannbefestigung nach einem der vorstehenden Ansprüche, in welcher auf einem abnehmbar an der Aufspannplatte befestigten Schuh eine Aufspannfläche (36-39) bereitgestellt wird.

11. Eine Aufspannbefestigung nach einem der vorstehenden Ansprüche, in welchem die Aufspannbefestigung (3) an gegenüberliegenden Seiten Aufspannpunkte (91) besitzt, die angepaßt sind um während der maschinellen Bearbeitung der Zylinderblöcke in Maschinen-Spannfuttern gehalten zu werden.

12. Eine Aufspannbefestigung nach Anspruch 11, in welcher die Spannpunkte (91) Bezugsoberflächen (92, 93) besitzt; die in definierter Beziehung mit den Spannoberflächen ausgerichtet sind, so daß eine maschinelle Bearbeitung unter Bezug auf die Lage der Spannpunkte (91) erfolgen kann.

13. Ein Verfahren zur maschinellen Bearbeitung eines Paares von Zylinderblöcken, welche sich beiderseits eines Kurbellagers erstreckende Ränder besitzen; unter Verwendung einer Aufspannbefestigung (3) nach einem der Ansprüche 1 bis 12, welches die Schritte umfaßt:
i) Anbieten der Zylinderblöcke (1,2) an gegenüberliegenden Seiten der Aufspannplatte, um die Spannoberflächen gegen die Ausrichtungsoberflächen zu setzen oder zu positionieren;
ii) In Betrieb setzen der Rückhaltevorrichtung (51.54), um die Zylinderblöcke bezüglich der Spannoberflächen an ihrem Platz zu halten;
iii) Ausführen eines maschinellen Bearbeitungsvorgangs an den Blöcken.

14. Ein Verfahren nach Anspruch 13, in welchem der Bearbeitungsvorgang es umfaßt beide Zylinderblöcke gleichzeitig maschinell zu bearbeiten, so daß die während der maschinellen Bearbeitung eines Zylinders angelegte Kraft eine Rückstellkraft für die maschinelle Bearbeitung des anderen Zylinderblocks bereitstellt.

15. Ein Verfahren nach Anspruch 13 oder 14, in welchem die Aufspannbefestigung auf gegenüberliegenden Seiten Spannpunkte besitzt, die angepaßt sind um während der maschinellen Bearbeitung der Zylinderblöcke in Maschinen-Spannfuttern gehalten zu werden, und das weiterhin zwischen Schritt ii) und Schritt iii) den Schritt umfaßt:
iv) Spannen der Befestigung in den Maschinen-Spannfuttern.

16. Ein Verfahren nach Anspruch 15, in welchem der Spannpunkt in einer definierten Beziehung zu den Spannoberflächen angeordnete Bezugsflächen besitzt, so daß eine maschinelle Bearbeitung unter Bezug auf die Lage der Spannpunkte erfolgen kann; das unmittelbar vor oder nach Schritt iii) weiterhin den Schritt einschließt:
v) Drehen und/oder Verschieben der Aufspannbefestigung, um verschiedene Seiten der Zylinderblöcke zu bearbeiten.

## Revendications

1. Dispositif de fixation (3) destiné à fixer une paire de blocs-cylindres (1, 2) comportant des jupes (17, 18, 19, 20) qui s'étendent de chaque côté d'un palier de vilebrequin (21, 22), comprenant un moyen de retenue destiné à retenir les blocs-cylindres (1, 2) sur le dispositif, **caractérisé en ce que** le dispositif (3) comprend une plaque de fixation double face (5, 6) sur laquelle les blocs-cylindres peuvent être fixés, la plaque de fixation comportant de chaque côté un ensemble de surfaces de fixation (36 à 39) conçues pour se positionner par rapport aux surfaces d'alignement (32 à 35) usinées sur le bloc à l'intérieur de la jupe et les moyens de retenue (51 à 54) étant disposés de chaque côté de la plaque de fixation afin de maintenir le bloc-cylindres (1, 2) sur le dispositif (3) après le positionnement des surfaces de fixation (36 à 39) par rapport aux surfaces d'alignement (32 à 35).

2. Dispositif de fixation selon la revendication 1, dans lequel les surfaces de fixation (36 à 39) se positionnent par rapport aux surfaces d'alignement (32 à 35) autour du palier de vilebrequin (21, 22), les surfaces d'alignement étant disposées pour positionner une moitié amovible du palier de vilebrequin par rapport à une moitié fixe du palier de vilebrequin.

3. Dispositif de fixation selon la revendication 2, dans lequel les surfaces de fixation (36 à 39) se positionnent par rapport à la totalité des surfaces d'alignement conçues pour positionner la moitié amovible du palier de vilebrequin par rapport à la moitié fixe du palier de vilebrequin.

4. Dispositif de fixation selon l'une quelconque des revendications précédentes, dans lequel trois surfaces de fixation (36 à 39) ou plus se positionnent par rapport à un nombre correspondant de surfaces d'alignement (32 à 35).

5. Dispositif de fixation selon l'une quelconque des revendications précédentes, dans lequel la paire de blocs-cylindres (1, 2) peut être fixée de sorte que les mêmes opérations d'usinage puissent être exécutées sur les deux blocs-cylindres (1, 2) simultanément d'une manière suivant laquelle la force appliquée durant l'usinage d'un premier bloc-cylindres procure une force de rappel à la force appliquée durant l'usinage de l'autre bloc-cylindres.

6. Dispositif de fixation selon l'une quelconque des revendications précédentes, dans lequel le moyen de retenue (51 à 54) est disposé pour agir au niveau de points sur les jupes autour de la périphérie externe des jupes.

7. Dispositif de fixation selon l'une quelconque des revendications précédentes, dans lequel le moyen de retenue (51 à 54) comporte au moins une pince qui se déplace afin de venir en prise avec une lèvre sur le bloc-cylindres.

8. Dispositif de fixation selon la revendication 7, dans lequel un certain nombre de pinces (51 à 54) peuvent être mises en oeuvre simultanément par un mécanisme à l'intérieur de la plaque de fixation.

9. Dispositif de fixation selon l'une quelconque des revendications précédentes, dans lequel la plaque de fixation comprend des sections latérales planes (5, 6) qui s'étendent de chaque côté d'une partie centrale surélevée (24) sur laquelle les surfaces de fixation sont disposées.

10. Dispositif de fixation selon l'une quelconque des revendications précédentes, dans lequel une surface de fixation (36 à 39) est disposée sur un patin fixé de façon amovible sur la plaque de fixation.

11. Dispositif de fixation selon l'une quelconque des revendications précédentes, dans lequel le dispositif de fixation (3) comporte des extrémités de fixation (91) sur les côtés opposés conçues pour être maintenues dans des mâchoires de serrage de machine durant l'usinage du bloc-cylindres.

12. Dispositif de fixation selon la revendication 11, dans lequel les extrémités de fixation (91) comportent des surfaces de référence (92, 93) disposées suivant une relation définie avec les surfaces de fixation de sorte que l'usinage puisse être réalisé en faisant référence à l'emplacement des extrémités de fixation (91).

13. Procédé d'usinage d'une paire de blocs-cylindres comportant des jupes qui s'étendent de chaque côté d'un palier de vilebrequin, en utilisant un dispositif de fixation (3) selon l'une quelconque des revendications 1 à 12, comprenant les étapes consistant à :
i) présenter les blocs-cylindres (1, 2) sur les côtés opposés de la plaque de fixation afin de positionner les surfaces de fixation par rapport aux surfaces d'alignement,
ii) actionner le moyen de retenue (51 à 54) afin de maintenir les blocs-cylindres en place par rapport aux surfaces de fixation,
iii) exécuter une opération d'usinage sur les blocs.

14. Procédé selon la revendication 13, dans lequel l'opération d'usinage implique l'usinage des deux blocs-cylindres en même temps que sorte que la force appliquée durant l'usinage d'un premier bloc-cylindres procure une force de rappel pour l'usinage de l'autre bloc-cylindres.

15. Procédé selon la revendication 13 ou la revendication 14, dans lequel le dispositif de fixation comporte des extrémités de fixation sur des côtés opposés conçues pour être maintenues dans des mâchoires de serrage de machine durant l'usinage des blocs-cylindres, comprenant en outre entre l'étape ii) et l'étape iii) l'étape consistant à :
iv) fixer le dispositif dans les mâchoires de serrage de la machine.

16. Procédé selon la revendication 15, dans lequel l'extrémité de fixation comporte des surfaces de référence disposées suivant une relation définie par rapport aux surfaces de fixation de sorte que l'usinage peut être réalisé en faisant référence à l'emplacement des extrémités de fixation, comprenant en outre, juste avant ou après l'étape iii) l'étape consistant à :
v) faire tourner et/ou déplacer en translation le dispositif de fixation afin d'usiner des côtés différents des blocs-cylindres.
